(19) **Europäisches Patentamt**

**European Patent Office**

**Office européen des brevets**

(11) Veröffentlichungsnummer : **0 432 658 B1**

(12) **EUROPÄISCHE PATENTSCHRIFT**

(45) Veröffentlichungstag der Patentschrift :
07.12.94 Patentblatt 94/49

(51) Int. Cl.$^5$ : **G11B 7/09, G11B 7/085**

(21) Anmeldenummer : 90123530.9

(22) Anmeldetag : 21.02.86

(54) **Verfahren zum Fokussieren eines Lichtstrahls auf einen optischen Aufzeichnungsträger.**

(30) Priorität : **09.03.85 DE 3508525**

(43) Veröffentlichungstag der Anmeldung :
**19.06.91 Patentblatt 91/25**

(45) Bekanntmachung des Hinweises auf die
Patenterteilung :
**07.12.94 Patentblatt 94/49**

(84) Benannte Vertragsstaaten :
**AT BE CH DE FR GB IT LI LU NL SE**

(56) Entgegenhaltungen :
**EP-A- 0 036 222**
**EP-A- 0 155 077**
**PATENT ABSTRACTS OF JAPAN vol. 8, no. 97
(P-272)(1534) 08 Mai 1984, & JP-A-59 008144
(TRIO K.K.) 17 Januar 1984,
PATENT ABSTRACTS OF JAPAN vol. 9, no. 50
(P-339)(1773) 05 März 1985, & JP-A-59 188845
(ONKYO K.K.) 26 Oktober 1984,
PATENT ABSTRACTS OF JAPAN vol. 8, no. 86
(P-269)(1523) 19 April 1984, & JP-A-59 002235
(PIONEER K.K.) 07 Januar 1984,**

(56) Entgegenhaltungen :
**PATENT ABSTRACTS OF JAPAN vol. 6, no. 41
(P-106)(919) 13 März 1982, & JP-A-56 159844
(MITSUBISHI DENKI K.K.) 09 Dezember 1981,
PATENT ABSTRACTS OF JAPAN vol. 8, no.
144 (P-284)(1581) 03 Juli 1984, & JP-A-59
042649 (MITSUBISHI DENKI K.K.) 09 März
1984,**

(60) Veröffentlichungsnummer der früheren
Anmeldung nach Art. 76 EPü : **0 214 194**

(73) Patentinhaber : **Deutsche Thomson-Brandt
GmbH
Postfach 1307
D-78003 Villingen-Schwenningen (DE)**

(72) Erfinder : **Baas, Dieter
Sofienstrasse 10
W-7640 Kehl-Auenheim (DE)**
Erfinder : **Kurz, Arthur
Ludwigsburger Strasse 26
W-7500 Karlsruhe 41 (DE)**
Erfinder : **Füldner, Friedrich
Wilstorfstrasse 19
W-7730 Villingen-Schwenningen (DE)**

## Beschreibung

Die Erfindung betrifft ein Verfahren und eine Schaltungsanordnung zum Fokussieren eines Lichtstrahls, der mittels eines optischen Systems, bestehend aus einer Lichtquelle und einem mittels eines Stellgliedes bewegbaren Objektivs auf einen optischen Aufzeichnungsträger fokussierbar ist, der den Lichtstrahl auf eine Anzahl von Photoelementen reflektiert, aus deren Ausgangsspannungen durch Subtraktion und Addition der so ermittelten Differenzen eine erste Steuerspannung - das sogenannte Fokusfehlersignal - gewonnen wird, die über einen Regelverstärker dem Stellglied zuführbar ist, so daß ein Regelkreis gebildet wird, wobei eine zweite Steuerspannung von einem Signalgenerator erzeugt wird, die von dem Signalgenerator verändert wird, bis der Lichtstrahl auf den Aufzeichnungsträger fokussiert ist, worauf der zu diesem Zeitpunkt angenommene Wert W der zweiten Steuerspannung gehalten und als Vorspannung dem Stellglied zugeführt wird.

In der DE-OS 33 02 240 ist eine Einrichtung zum Lesen von Informationen beschrieben, die auf einem plattenförmigen Aufzeichnungsträger in spiralförmigen Spuren abgespeichert sind. Als Beispiel für eine plattenförmigen Aufzeichnungsträger sei die CD-Platte eines CD-Plattenspielers genannt. Die in den Spuren der CD-Platte abgespeicherten Informationen, z.B. Ton- oder Bildsignale, werden mittels einer optischen Abtasteinrichtung, die ein Objektiv enthält und einen Lichtstrahl zum Abtasten der Informationen auf die CD-Platte, den Aufzeichnungsträger, richtet, gelesen. Der Lichtstrahl wird von einem Laser erzeugt. Eine Fokussierungssteuereinrichtung verschiebt das Objektiv so entlang seiner optischen Achse, daß sein Brennpunkt auf den Aufzeichnungsträger zu liegen kommt. Man nennt diesen Regelvorgang, der im Prinzip der Scharfeinstellung eines Fernrohres entspricht, Fokussierung.

Der Lichtstrahl wird vom Aufzeichnungsträger auf eine Lichtstrahlempfangseinrichtung reflektiert. Damit die Informationen vom Aufzeichnungsträger einwandfrei ausgelesen werden können, ist eine dauernde Fokussierung durch die Fokussteuereinrichtung, die einen Regelkreis darstellt, nötig, denn bereits geringe Abweichungen von der Scharfeinstellung können zu Fehlern beim Lesen der Informationen führen.

Weil die Dicke der Aufzeichnungsträger von Aufzeichnungsträger zu Aufzeichnungsträger relativ stark streut, muß das Objektiv von der Fokussteuereinheit nahezu jedesmal, wenn ein anderer Aufzeichnungsträger eingelegt wird, um eine Strecke a verschoben werden, damit der Brennpunkt auf den Aufzeichnungsträger zu liegen kommt. Diese Strecke a ist jedoch wesentlich länger als die Strecken, um die das Objektiv verschoben werden muß, um den Brennpunkt auf einem eingelegten Aufzeichnungsträger zu halten, weil die Dicke eines Aufzeichnungsträgers bedeutend weniger streut als die Dicke von Aufzeichnungsträger zu Aufzeichnungsträger. In der DE-OS 33 02 240 wird auf die unterschiedlichen Dicken der Aufzeichnungsträger und den dadurch verursachten größeren Regelzeiten sowie der dadurch bedingten ungenaueren Fokussierung nicht eingegangen.

Die Lichtstrahlempfangseinrichtung besteht, wie in den Figuren 4a, 4B, 4C und 4D der genannten DE-OS gezeigt ist, aus vier Photodioden 14a, 14b, 14c und 14d, die in einem Quadrat so angeordnet sind, daß sie das Quadrat in vier gleich große Quadrate aufteilen. Die Ausgangsspannungen der vier Photodioden 14a, 14b, 14c und 14d werden einer Betriebsschaltung zugeführt, in der die beiden Summen der Ausgangsspannungen zweier jeweils diagonal gegenüberliegenden Photodioden gebildet werden. Das aus der Differenz dieser beiden Summen gewonnene Fokussierungsfehlersignal SF wird der Fokussierungssteuereinrichtung zugeführt, die das Objektiv entlang seiner optischen Achse so lange bewegt, bis der Lichtstrahl auf den Aufzeichnungsträger fokussiert ist.

Unter der Annahme, daß ideale, vollkommen gleiche Photodioden verwendet werden, wird das Fokussierungsfehlersignal null, wenn der Lichtstrahl genau auf den Aufzeichnungsträger fokussiert ist. In diesem Fall bildet sich der reflektierte Lichtstrahl auf den vier Photodioden, wie in der Figur 4B der genannten DE-OS dargestellt ist, als Kreis ab, so daß jede Photodiode mit der gleichen Lichtenergie bestrahlt wird. Weil jede Photodiode deshalb die gleiche Ausgangsspannung liefert, wird das Fokussierungsfehlersignal zu null. Wenn dagegen das Objektiv zu nahe am Aufzeichnungsträger oder zu weit von ihm entfernt ist, bildet sich der reflektierte Lichtstrahl auf den vier Photodioden nicht als Kreis, sondern wegen der astigmatischen Linse des Objektivs als Ellipse ab. Weil in diesem Fall der Defokussierung die Photodioden wegen der auf sie strahlenden unterschiedlichen Lichtenergien unterschiedliche Ausgangsspannungen liefern, ist das Fokussierungsfehlersignal SF von null verschieden. Es bewirkt deshalb solange eine Verschiebung des Objektivs, bis es zu null wird, d.h. bis der Brennpunkt auf dem Aufzeichnungsträger liegt.

Weil reale Photodioden in ihren Werten stets streuen, wird das Fokussierungsfehlersignal jedoch nicht genau zu null, wenn auf jede Photodiode die gleiche Lichtenergie einfällt. Vielmehr wird es einen von Null verschiedenen Wert annehmen. Den Wert Null nimmt das Fokussierungsfehlersignal je nach Streuung der Parameter der Photodioden bei mehr oder weniger stark unterschiedlichen auf die einzelnen Photodioden einfallenden Lichtenergien an. Weil die Fokussteuereinrichtung jedoch den Wert Null des Fokussierungsfehlersignals als korrekten Wert interpretiert, wird der Brennpunkt des Objektivs entweder vor oder hinter dem Aufzeichnungsträger liegen. Eine präzise Fokussierung ist deshalb bei der Einrichtung aus der DE-OS 33 02 240 nicht immer möglich.

Außerdemarbeitet der Regelverstärker nicht symmetrisch, sondern unsymmetrisch in seinem Regelbereich. Die Abweichung von einer genauen Fokussierung hängt von der Streuung der Diodenparameter ab. Wenn z.B. die Einrichtung aus der genannten DE-OS in CD-Plattenspieler eingebaut wird, streut auch die Abweichung von Gerät zu Gerät, denn es ist unmöglich, in alle CD-Plattenspieler genau gleiche Photodioden einzubauen. Das wiederum führt zu Geräten unterschiedlicher Qualität.

In HitachiService Manual, TyNo 348E, DA- 1000, December 1982 ist auf Seite 22 in Fig. 30 ein Regelkreis zum Fokussieren des Lichtstrahls bei einem CD-Plattenspieler gezeigt. Die Off-Set-Spannung des Regelverstärkers IC 100 und der Lichtempfangs- und Auswerteschaltung werden durch manuelles Einstellen des Potentiometers R 102 kompensiert. Ändern sich die Offsetspannungen infolge Temperaturschwankungen oder Alterung der Bauteile, so kann die Qualität des CD-Plattenspielers spürbar nachlassen. Um wieder eine einwandfreie Wiedergabe des Tons zu erzielen, ist ein erneuter Abgleich des Regelverstärkers IC 100 durch Verstellen des Potentiometers R 102 in der Werkstatt nötig. Derartige Wartungsmaßnahmen sind für Kunden nicht nur unangenehm, sie kosten auch Geld.

Aus der JP-A 59-188845 ist eine optische Abtastvorrichtung mit einem Fokusregelkreis bekannt, bei der eine erste Steuerspannung für den Fokusregelkreis erzeugt wird. Eine zweite treppenförmige Steuerspannung wird mittels eines Taktgenerators, eines Zählers und eines Digital-Analog-Wandlers erzeugt und einem Speicher sowie über einen steuerbaren Schalter einem Fokusfehlerdetektor zugeführt, dessen Ausgang mit dem Stellglied des Fokusregelkreises verbunden ist. Das optisch abgetastete Datensignal wird in ein elektrisches NF-Signal umgewandelt, das als Tonsignal bezeichnet wird. Wenn das Tonsignal einen Spitzenwert erreicht, wird der Wert der treppenförmigen zweiten Steuerspannung im Speicher gespeichert. Gleichzeitig wird der Ausgang des Digital-Analog-Wandlers vom Fokusfehlerdetektor durch öffnen eines ersten Schalters getrennt, während gleichzeitig durch Schließen eines zweiten Schalters der Ausgang des Speichers mit dem Fokusfehlerdetektor verbunden wird. Die im Speicher gespeicherte zweite Steuerspannung liegt nun ständig als Kompensationsspannung am Fokusfehlerdetektor.

Ein Nachteil dieser Anordnung besteht jedoch darin, daß zur Kompensation der Offsetspannung das Tonsignal benötigt wird. Es kann daher erst kompensiert und fokussiert werden, wenn der Lichtstrahl eine Datenspur auf dem Aufzeichnungsträger abtastet. Trifft der Lichtstrahl dagegen auf einen Bereich des Aufzeichnungsträgers, wo keine Daten lesbar sind, so ist weder eine Kompensation noch eine Fokussierung des Lichtstrahls möglich. Das kann z.B. der Fall sein, wenn der Lichtstrahl zwischen zwei Datenspuren fällt, wenn der Aufzeichnungsträger fehlerhaft, beschädigt oder verschmutzt ist. An den fehlerhaften, beschädigten oder verschmutzten Stellen ist weder die Kompensation des Offsets noch die Fokussierung möglich. Erst wenn der Lichtstrahl Daten abtastet und dadurch ein Tonsignal erzeugt wird, kann mit der Kompensation und der Fokussierung begonnen werden. Es kann deshalb unter ungünstigen Umständen länger dauern, bis der Lichtstrahl genau auf den Aufzeichnungsträger fokussiert ist.

Weil, wie bereits erwähnt, die Dicke der Aufzeichnungsträger verhältnismäßig stark streut, wird die Fokussierung erschwert.

Es ist daher Aufgabe der Erfindung, ein Verfahren zum Fokussieren eines Lichtstrahls auf einen optischen Aufzeichnungsträger an die unterschiedlichen Dicken der Aufzeichnungsträger anzupassen.

Die Erfindung löst diese Aufgabe dadurch, daß während die zweite Steuerspannung verändert wird, um den Lichtstrahl auf den Aufzeichnungsträger zu fokussieren, die Summe aus der ersten und zweiten Steuerspannung über ein Filter dem Regelverstärker zugeführt wird, das die erste Steuerspannung Wechselspannungsmäßig trennt, die zweite Steuerspannung dagegen durchläßt.

Die unterschiedliche Dicken verschiedener Aufzeichnungsträger werden dadurch berücksichtigt, daß bei gleichspannungsmäßig geschlossenem, wechselspannungsmäßig aber offenem Regelkreis fokussiert wird.

Es zeigen

die Figur 1 eine Schaltungsanordnung gemäß Anspruch 10

die Figur 2 eine Schaltungsanordnung gemäß Anspruch 11

die Figur 3 eine Schaltungsanordnung gemäß Anspruch 12

die Figuren 4, 5, 6, 7, 8 und 9 Spannungsdiagramme sowie

die Figur 10 und 11 sogenannte Aktuatoren mit Objektiv und Spule.

Die Lichtempfangs- und Auswerteschaltung O kann z.B. so aufgebaut sein, wie es in der DE-OS 33 02 240 beschrieben ist. Sie ist mit vier Photodioden A, B, C und D ausgestattet. Die Spannung $U_{FE}$ am Ausgang der Lichtempfangs- und Auswerteschaltung O, die dem Fokussierungsfehlersignal SF entspricht, wird nach folgender Formel gebildet:

$$U_{FE} = (A - D) + (B - C)$$

Unter der Voraussetzung, daß die vier Photodioden A, B, C und D ideale Bauteile sind, wird die Spannung $U_{FE}$ zu null, wenn der Brennpunkt auf dem Aufzeichnungsträger liegt.

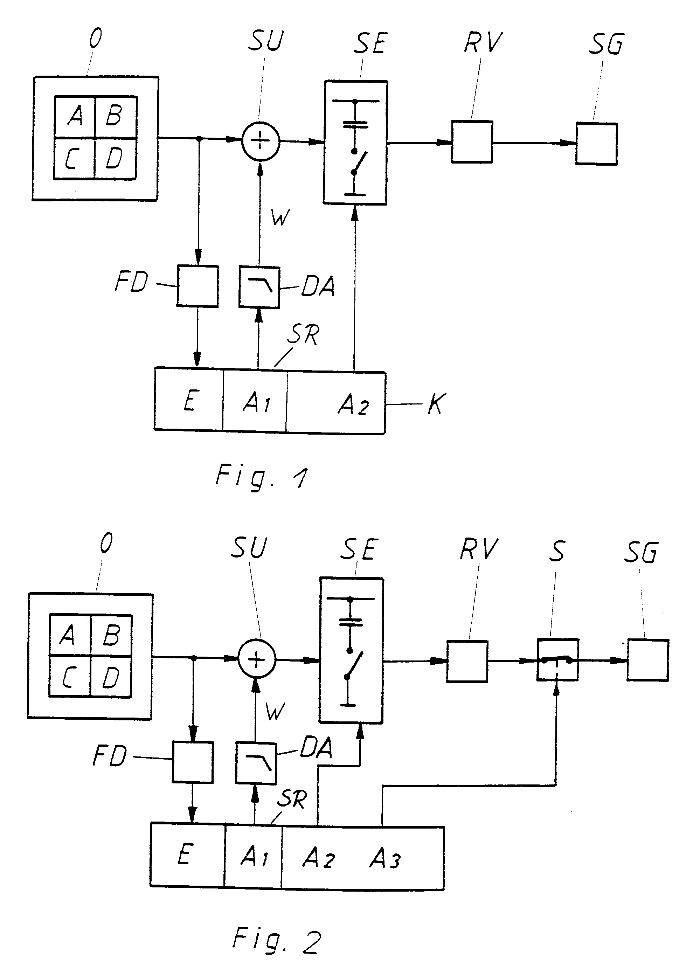

Es wird nun die in Figur 1 gezeigte und im Anspruch 10 beschriebene Schaltungsanordnung erläutert.

Der Ausgang einer Lichtempfangs- und Auswerteschaltung O ist mit dem Eingang eines Fokusdetektors FD und mit dem einen Eingang einer Summationsstelle SU verbunden, deren anderer Eingang mit dem Ausgang eines Digital-Analog-Wandlers DA verbunden ist. Der Ausgang der Summationsstelle SU ist mit dem Eingang einer Schalteinrichtung SE verbunden, deren Ausgang mit dem Eingang eines Regelverstärkers RV verbunden ist. Der Ausgang des Regelverstärkers RV ist mit dem Eingang eines Stellgliedes SG verbunden. Der Eingang E einer Kontrolleinheit K ist mit dem Ausgang des Fokusdetektors FD verbunden, ein erster Ausgang A1 der Kontrolleinheit K ist mit dem Eingang des Digital-Analog-Wandlers DA verbunden, während ein zweiter Ausgang A2 der Kontrolleinheit K mit dem Steuereingang der Schalteinheit SE verbunden ist.

Zu Beginn des Fokussierens gibt die Kontrolleinheit K ein Signal an ihrem zweiten Ausgang A2 an die Schalteinheit SE ab, die darauf den Ausgang der Summationsstelle SU vom Eingang des Regelverstärkers RV wechselspannungsmäßig trennt, indem sie diese beiden Anschlüsse wechselspannungsmäßig auf Bezugspotential legt, während der Ausgang der Summationsstelle SU und der Eingang des Regelverstärkers RV gleichspannungsmäßig weiterhin miteinander verbunden bleiben. Die Kontrolleinheit K ändert nun das Signal an ihrem ersten Ausgang A1 so, daß die Spannung am Ausgang des Digital-Analog-Wandlers DA linear ansteigt. Weil diese linear ansteigende Spannung über den Regelverstärker RV dem Stellglied SG zugeführt wird, wird das Objektiv bewegt.

Wenn der Brennpunkt auf dem Aufzeichnungsträger liegt, gibt der Fokusdetektor FD ein Signal an die Kontrolleinheit K ab, die darauf die zu diesem Zeitpunkt an ihrem ersten Ausgang A1 liegende Spannung hält und ein Signal an ihrem zweiten Ausgang A2 an die Schalteinheit SE abgibt, die den Ausgang der Summationsstelle SU wieder wechselspannungsmäßig mit dem Eingang des Regelverstärkers RV verbindet. Weil deshalb der Regelkreis wieder vollständig geschlossen ist, wird das Objektiv vom Stellglied SG so geführt, daß der Brennpunkt stets auf dem Aufzeichnungsträger liegen bleibt.

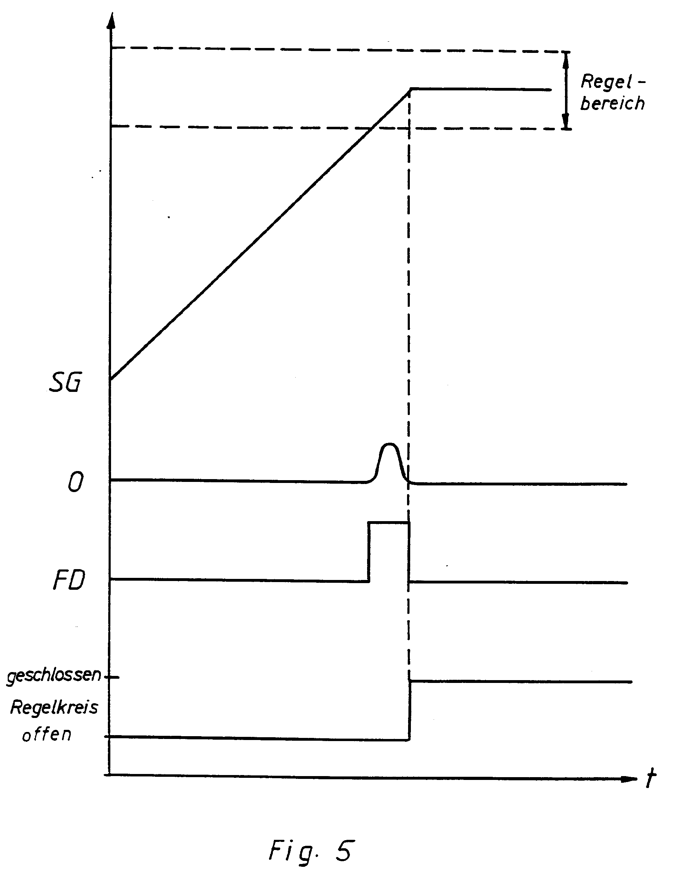

In Figur 4 ist der Verlauf der Spannung $U_{FE}$ am Ausgang der Lichtempfangs- und Auswerteschaltung O und das Signal FZ am Ausgang des Fokusdetektors FD gezeigt, wenn das Objektiv vom größten möglichen Abstand zum Aufzeichnungsträger ausgehend auf ihn zu bewegt wird bis zum kleinsten möglichen Abstand. Wenn die Kurve die Abszisse schneidet, liegt der Brennpunkt auf dem Aufzeichnungsträger.

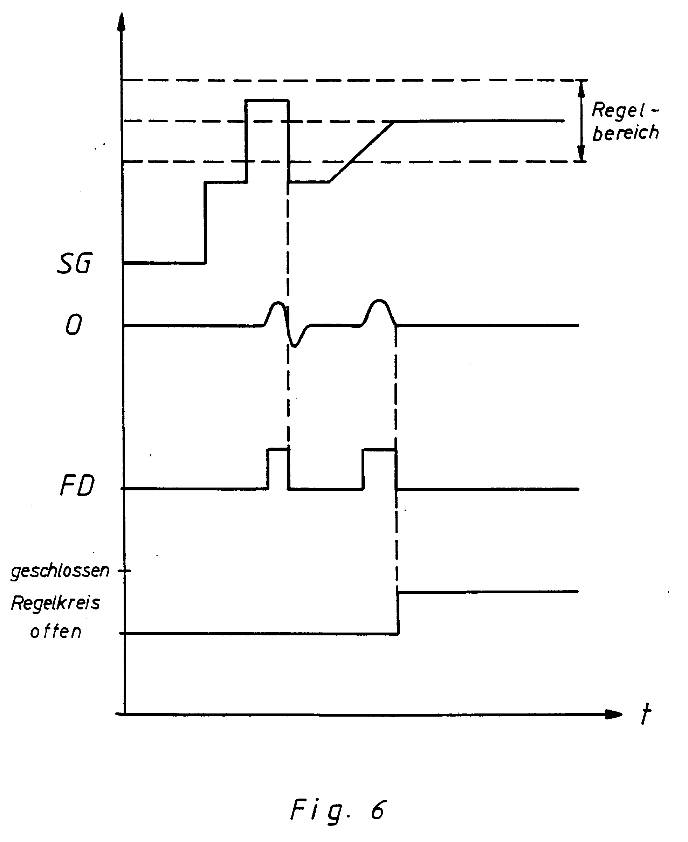

In Figur 5 und 6 sind die Spannungen am Eingang des Stellgliedes SG, am Ausgang der Lichtempfangs- und Auswerteschaltung O und am Ausgang des Fokusdetektors FD sowie der Zustand des Regelkreises - offen oder geschlossen - über der Zeit aufgetragen.

Wie in Figur 6 dargestellt ist, kann die Spannung am Eingang des Stellgliedes SG zunächst anstelle linear treppenförmig in Schritten erhöht werden, bis der Fokusdetektor FD zum ersten Mal ein Signal an die Kontrolleinheit K abgibt. Das ist der Fall, wenn der Brennpunkt zum ersten Mal auf den Aufzeichnungsträger zu liegen kommt. Dieses erste Signal des Fokusdetektors FD bewirkt, daß die Spannung am Eingang des Stellgliedes SG um den letzten Schritt erniedrigt wird, um dann linear anzusteigen, bis der Fokusdetektor FD ein zweites Mal ein Signal an die Kontrolleinheit K abgibt. Das ist der Fall, wenn der Brennpunkt wieder auf dem Aufzeichnungsträger liegt. Das zweite Signal am Ausgang des Fokusdetektors FD bewirkt, daß der Regelkreis von der Kontrolleinheit K geschlossen wird. Durch den treppenförmigen Anstieg der Spannung am Eingang des Stellgliedes SG wird schneller als bei linearem Anstieg fokussiert.

Weil die Schwankungen der Offsetspannungen, deren Wert man im voraus nicht kennt, wesentlich größer sind als die Steuerspannung, die nötig ist, um das Objektiv in die Lage zu bringen, bei der der Brennpunkt auf dem Aufzeichnungsträger liegt, ist es sinnvoll, die Kompensation anstatt mit null Volt mit einer betragmäßig maximalen Kompensationsspannung zu beginnen.

Die Schaltungsanordnung hat den Vorteil, daß gleichzeitig mit dem Fokussieren die Offsetspannung des Regelverstärkers RV und der Lichtempfangs- und Auswerteschaltung O kompensiert werden. Weil bei gleichspannungsmäßig geschlossenem Regelkreis fokussiert wird, werden unterschiedliche Dicken verschiedener Aufzeichnungsträger berücksichtigt. Jedoch hat diese Schaltungsanordnung den Nachteil, daß bei nicht in das Gerät eingelegtem Aufzeichnungsträger eine grobe Fokussierung kritisch ist, weil mit einer Übersteuerung des Regelverstärkers RV und somit auch des Stellgliedes SG zu rechnen ist.

Dieser Nachteil läßt sich bei der Schaltungsanordnung, die in Figur 2 gezeigt und im Anspruch 11 beschrieben ist, dadurch beheben, daß zusätzlich zu der Schalteinheit SE ein steuerbarer Schalter S nach dem Regelverstärker RV vorgesehen ist, dessen Steuereingang mit einem dritten Ausgang A3 der Kontrolleinheit K verbunden ist.

Der steuerbare Schalter S bleibt bei störungsfreiem Betrieb geschlossen. Erst wenn aus irgend welchen Gründen die Fokussierung nicht gelingt, wird der steuerbare Schalter S von der Kontrolleinheit K geöffnet, damit das Stellglied SG nicht übersteuert wird. Der steuerbare Schalter S hat deshalb lediglich eine Schutzfunktion.

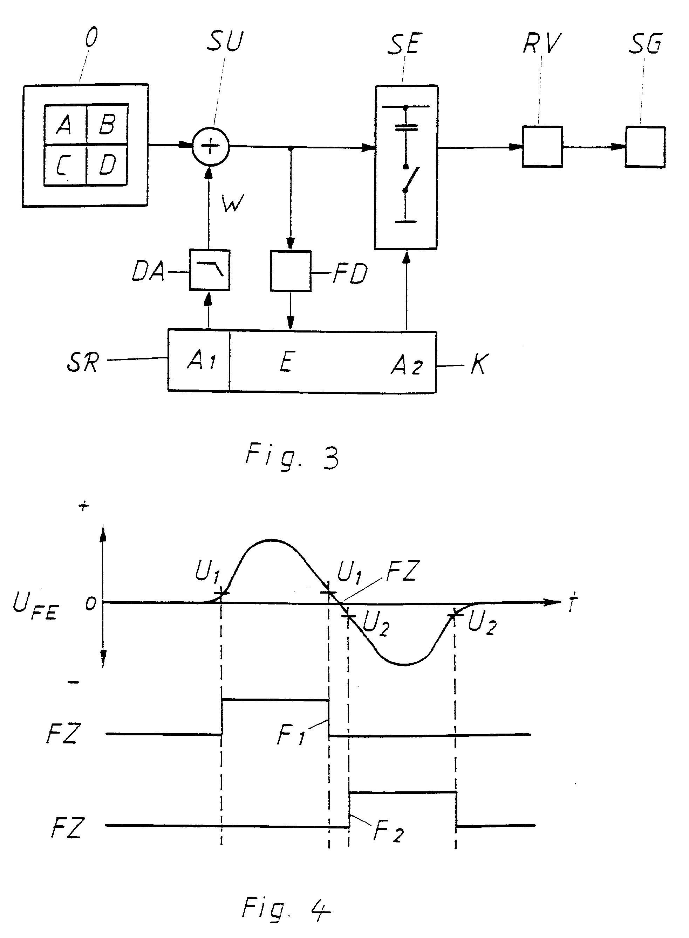

Figur 3 zeigt und Anspruch 12 beschreibt eine dritte Schaltungsanordnung, die sich von der Schaltungsanordnung aus Figur 1 nur dadurch unterscheidet, daß der Eingang des Fokusdetektors FD nicht mit dem einen Eingang, sondern mit dem Ausgang der Summationsstelle SU verbunden ist.

Durch die Maßnahme, den Fokusdetektor FD nach der Summationsstelle SU vorzusehen, wird die Offsetspannung der Lichtempfangs- und Auswerteschaltung O, die durch unterschiedliche Parameter der vier Photodioden A, B, C und D verursacht wird, getrennt von der Offsetspannung des Regelverstärkers RV erfasst und kompensiert.

Die Kompensation wird dadurch ermöglicht, daß bei nicht eingelegtem Aufzeichnungsträger alle vier Photodioden A, B, C und D der Lichtempfangs- und Auswerteschaltung O unabhängig von der Lage des Objektivs kein Licht aus der Lichtquelle des optischen Systems empfangen. Weil die vier Photodioden deshalb im Dunkeln liegen, geben sie lediglich die sogenannten Dunkelströme ab, die, wie in der Einleitung bereits erklärt wurde, streuen.

Der Fokusdetektor FD gibt ein erstes Signal an die Kontrolleinheit K ab, wenn die Spannung am Ausgang der Summationsstelle SU null wird. Das ist aber gerade dann der Fall, wenn die Offsetspannung der Lichtempfangs- und Auswerteschaltung O, verursacht durch die unterschiedlichen Dunkelströme der vier Photodioden, durch die Spannung am Ausgang des Digital-Analog-Wandlers DA kompensiert wird. Diese Kompensationsspannung wird gehalten.

Nach Einlegen des Aufzeichnungsträgers gibt die Kontrolleinheit K eine veränderbare Spannung an ihrem ersten Ausgang A1 ab, die der Kompensationsspannung überlagert wird. Dadurch wird das Objektiv vom Stellglied SG so lange bewegt, bis der Fokusdetektor FD feststellt, daß der Brennpunkt auf dem Aufzeichnungsträger liegt, und ein Signal an die Kontrolleinheit K abgibt, die darauf die zu diesem Zeitpunkt an ihrem ersten Ausgang A1 abgegebene Spannung hält. Zusätzlich bewirkt die Kontrolleinheit K, daß die Schalteinheit SE den Regelverstärker RV und die Summationsstelle SU wieder wechselspannungsmäßig miteinander verbindet. Weil der Regelkreis nun vollständig geschlossen ist, wird das Objektiv so geführt, daß der Brennpunkt auf dem Aufzeichnungsträger liegen bleibt.

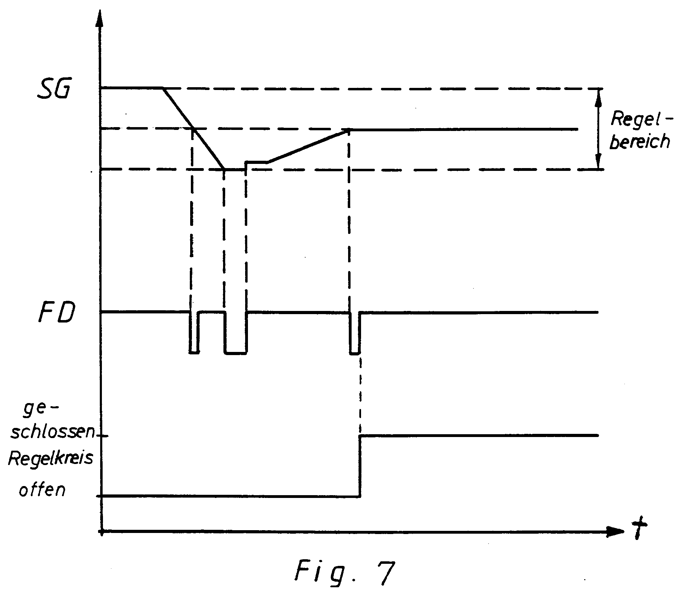

In Figur 7 sind die Spannungen am Ausgang des Stellgliedes SG und am Ausgang des Fokusdetektors FD sowie der Zustand des Regelkreises - offen oder geschlossen - über der Zeit aufgetragen.

Es ist auch möglich, daß die Kontrolleinheit K zu Beginn des Fokussierens nach dem wechselspannungsmäßigen öffnen des Regelkreises an ihrem Ausgang A1 eine pulsbreitenmodulierte Spannung $U_{PWM}$ abgibt, deren Pulsbreite periodisch geändert wird. Der Digital-Analog-Wandler DA, der z.B. als Integrator ausgeführt sein kann, gibt deshalb je nach Aufbau an seinem Ausgang eine sägezahn- oder dreieckförmige Spannung $U_s$ an das Stellglied SG ab.

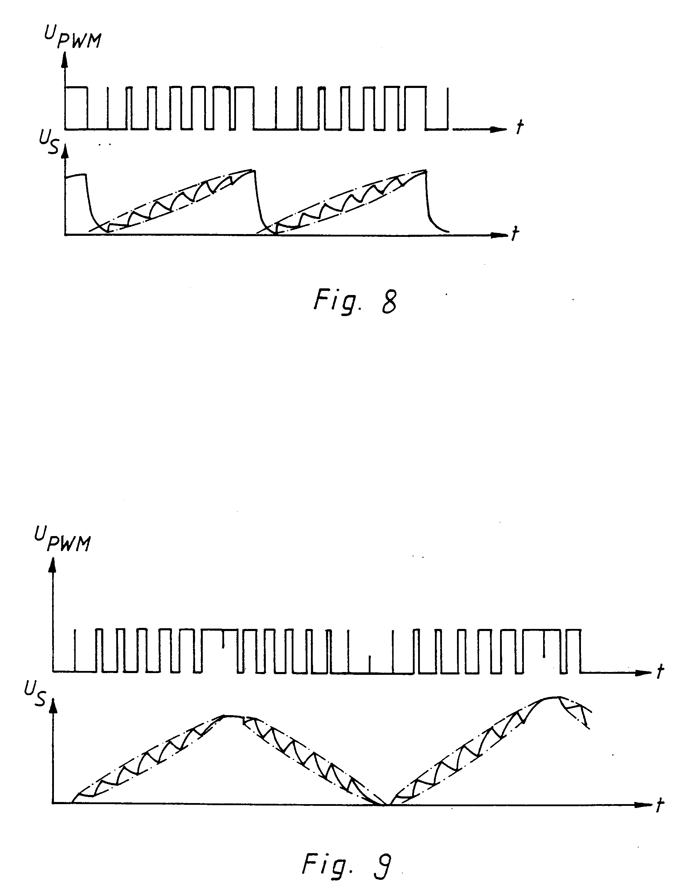

In Figur 8 sind die pulsbreitenmodulierte Spannung $U_{PWM}$ und die sägezahnförmige Spannung $U_s$ gezeigt. In Figur 9 sind die pulsbreitenmodulierte Spannung $U_{PWM}$ und die dreieckförmige Spannung $U_s$ gezeigt.

Die beschriebenen Schaltungsanordnungen weisen den Vorteil auf, daß bei jedem Fokussierversuch und damit jedesmal beim Wiedereinschalten des Gerätes sowohl die Offsetspannung des Regelverstärkers RV als auch die der Lichtempfangs- und Auswerteschaltung O kompensiert werden.

Bei der Herstellung von CD-Plattenspielern, die mit einer der in den Figuren 1, 2 oder 3 gezeigten Schaltungsanordnungen ausgerüstet sind, ist kein Abgleich der Regelverstärker an einem Potentiometer von Hand nötig, wie es bei der Schaltungsanordnung aus Figur 30 auf Seite 22 des Hitachi Service Manuals noch der Fall ist. Weil jedesmal, wenn das Gerät eingeschaltet wird, die Offsetspannungen von neuem kompensiert werden, wirken sich langfristige Driften der Offsetspannungen infolge Alterung der Bauteile nicht aus. Es kann deshalb nicht der Fall eintreten, daß der Regelverstärker des Fokusregelkreises bei einem CD-Plattenspieler, der zunächst einwandfrei spielte, bei dem aber nach längerer Zeit die Klangqualität spürbar nachläßt, in der Werkstatt neu abgeglichen werden muß. Daß solche Wartungsmaßnahmen entfallen, ist als weiterer Vorteil zu betrachten, denn die Wartung eines Gerätes ist nicht nur für den Kunden unangenehm, sie kostet auch dessen Geld.

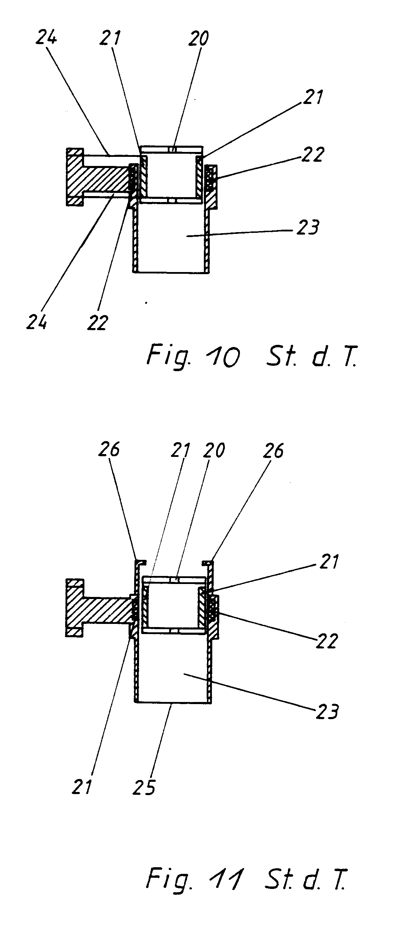

Figur 10 zeigt einen sogenannten Aktuator mit eingeschränktem mechanischen Fokusbereich.

Das Objektiv 20 mit einem Objektivschaft 21 wird von Blattfedern 24 in seiner Mittelstellung gehalten und zentriert. Permanentmagnete sind am Objektivschaft 21 enthalten, und im Rohr 23 ist eine eingebettete Spule 22 angedeutet. Solche bereits bekannte Aktuatoren sind aufwendig und teuer.

Figur 11 zeigt einen ähnlichen ebenfalls bekannten Aktuator mit einem zylindrischen Objektivschaft 21, mit einem Objektiv 20 und einem Rohr 23, in dem sich der Objektivschaft 21 frei bewegen kann. Nach oben und unten ist der Objektivschaft 21 mechanisch begrenzt durch Anschläge 26 bzw. 25 und gegen Verdrehen gesichert.

Der Nachteil eines solchen Systems ist, daß Reibung und mechanische Unsymmetrien das Objektiv 20 samt Objektivschaft 21 bei langsamen und kleinen Bewegungen schwer beherrschbar machen. Bewegt sich der Objektivschaft 21 mit dem Objektiv 20 nicht, so kann es weiter zu einer Verkantung in dem Rohr 23 kommen. Tritt nun ein durch einen Schlag des Aufzeichnungsträgers verursachtes Regelsignal an der Spule auf, so benötigt die Spule wesentlich mehr Energie, um den Objektivschaft 21 aus seinem verkanteten Zustand zu befreien als für die nötige Ausgleichs- und Fokusfolgebewegung erforderlich wäre. Die Folge davon ist ein Anwachsen des Regelsignals, weil der Objektivschaft 21 so lange keine Bewegung ausführt, bis die Energie groß genug ist, um das Losbrechmoment zu überwinden. Dadurch kann es zu Überschwingungen des Objektivschafts 21 samt Objektiv 20 kommen, die die Regelzeit beträchtlich verlängern.

Solche Überschwingungen des Objektivschaftes lassen sich dadurch vermeiden, daß dem Regelsignal ständig eine Wechselkomponente überlagert wird. Weil die Wechselkomponente den Objektivschaft dauernd in Bewegung hält, denn er schwingt um eine Mittellage, ist ein Verkanten ausgeschlossen. Durch die dauernde Hin- und Herbewegung des Objektivschaftes 21 im Rohr 23 tritt zwischen diesen beiden Teilen nur noch Gleitreibung und nicht mehr die größere Haftreibung auf. Deshalb bedarf es einer weit geringeren Kraft, um den schwingenden Objektivschaft 21 zu verschieben, als es bei ruhendem Objektivschaft 21 der Fall wäre. Allerdings läßt sich bei überlagerter Wechselkomponente nicht so genau fokussieren wie ohne Überlagerung.

Es ist ferner möglich, den Wert W der zweiten Steuerspannung für verschiedene Typen von Aufzeichnungsträgern, z.B. Platten unterschiedlicher Dicken, zu speichern.

Beim Fokussieren wird dann bei einem bestimmten Typ eines Aufzeichnungsträgers die zweite Steuerspannung vom für diesen Typ abgespeicherten charakteristischen Wert ausgehend verändert. Diese Maßnahme bringt den Vorteil, daß schneller fokussiert werden kann, weil das Objektiv bereits zu Beginn des Fokussierens in der Nähe der richtigen Lage steht.

**Patentansprüche**

1. Verfahren zum Fokussieren eines Lichtstrahls, der mittels eines optischen Systems, bestehend aus einer Lichtquelle und einem mittels eines Stellgliedes (SG) bewegbaren Objektivs auf einen optischen Aufzeichnungsträger fokussierbar ist, der den Lichtstrahl auf eine Anzahl von Photoelementen (A, B, C, D) reflektiert, aus deren Ausgangsspannungen durch Subtraktion und Addition der so ermittelten Differenzen eine erste Steuerspannung - das sogenannte Fokusfehlersignal ($U_{FE}$) - gewonnen wird, die über einen Regelverstärker (RV) dem Stellglied (SG) zuführbar ist, so daß ein Regelkreis gebildet wird, wobei eine zweite Steuerspannung ($U_s$) von einem Signalgenerator (SR) erzeugt wird, die von dem Signalgenerator (SR) verändert wird, bis der Lichtstrahl auf der Aufzeichnungsträger fokussiert ist, worauf der zu diesem Zeitpunkt angenommene Wert W der zweiten Steuerspannung ($U_s$) gehalten und als Vorspannung dem Stellglied (SG) zugeführt wird, **dadurch gekennzeichnet**, daß während die zweite Steuerspannung ($U_s$) verändert wird, um den Lichtstrahl auf den Aufzeichnungsträger zu fokussieren, die Summe aus der ersten und zweiten Steuerspannung ($U_{FE}$, $U_s$) über ein Filter (SE) dem Regelverstärker (RV) zugeführt wird, das die erste Steuerspannung ($U_{FE}$) Wechselspannungsmäßig trennt, die zweite Steuerspannung ($U_s$) dagegen durchläßt.

2. Verfahren nach Anspruch 1, **dadurch gekennzeichnet**, daß der Wert W der zweiten Steuerspannung ($U_s$) für verschiedene Typen von Aufzeichnungsträgern speicherbar ist und daß beim Fokussieren bei einem bestimmten Typ eines Aufzeichnungsträgers die zweite Steuerspannung vom für diesen Typ gespeicherten Wert W ausgehend verändert wird.

3. Verfahren nach Anspruch 1 oder 2, **dadurch gekennzeichnet**, daß die zweite Steuerspannung ($U_s$) durch Pulsmodulation verändert wird.

4. Verfahren nach Anspruch 3, **dadurch gekennzeichnet**, daß als Pulsmodulationsverfahren die Pulsbreitenmodulation vorgesehen ist.

5. Verfahren nach Anspruch 4, **dadurch gekennzeichnet**, daß die zweite Steuerspannung ($U_s$) sägezahnförmig ausgebildet ist.

6. Verfahren nach Anspruch 4, **dadurch gekennzeichnet**, daß die zweite Steuerspannung ($U_s$) dreieckförmig ausgebildet ist.

7. Verfahren nach Anspruch 1, 2, 3, 4, 5 oder 6, **dadurch gekennzeichnet**, daß der Regelspannung eine Wechselspannung überlagert wird.

8. Schaltungsanordnung zum Fokussieren eines Lichtstrahls, der mittels eines optischen Systems, bestehend aus einer Lichtquelle und einem mittels eines Stellgliedes (SG) bewegbaren Objektivs auf einen optischen Aufzeichnungsträger fokussierbar ist, der den Lichtstrahl auf eine Anzahl von Photoelementen (A, B, C, D) reflektiert, aus deren Ausgangsspannungen durch Subtraktion und Addition der so ermittelten Differenzen eine erste Steuerspannung - das sogenannte Fokusfehlersignal ($U_{FE}$) - gewonnen wird, die über einen Regelverstärker (RV) dem Stellglied (SG) zuführbar ist, so daß ein Regelkreis gebildet wird, wobei Mittel vorgesehen sind, um eine zweite Steuerspannung ($U_s$) von einem Signalgenerator (SR) zu erzeugen, die von dem Signalgenerator (SR) verändert wird, bis der Lichtstrahl auf den Aufzeichnungsträger fokussiert ist, worauf der zu diesem Zeitpunkt angenommene Wert W der zweiten Steuerspannung ($U_s$) gehalten und als Vorspannung dem Stellglied (SG) zugeführt wird, **dadurch gekennzeichnet**, daß vor

dem Regelverstäreker (RV) ein Filter (SE) einschaltbar ist, das die erste Steuerspannung ($U_{FE}$) Wechselspannungsmäßig trennt, die zweite Steuerspannung ($U_s$) dagegen durchläßt.

9. Schaltungsanordnung nach Anspruch 8, **dadurch gekennzeichnet**, daß Mittel vorgesehen sind derart, daß der Wert W der zweiten Steuerspannung ($U_s$) für verschiedene Typen von Aufzeichnungsträgern speicherbar ist und daß beim Fokussieren bei einem bestimmten Typ eines Aufzeichnungsträgers die zweite Steuerspannung vom für diesen Typ gespeicherten Wert W ausgehend verändert wird.

10. Schaltungsanordnung nach Anspruch 8, **dadurch gekennzeichnet**, daß der Ausgang einer Lichtempfangs- und Auswerteschaltung (O) mit dem Eingang eines Fokusdetektors (FD) und mit dem einen Eingang einer Summationsstelle (SU) verbunden ist, deren anderer Eingang mit dem Ausgang eines Digital-Analog-Wandlers (DA) verbunden ist, daß der Ausgang des Fokusdetektors (FD) mit dem Eingang (E) einer Kontrolleinheit (K) verbunden ist, deren erster Ausgang (A1) mit dem Eingang des Digital-Analog-Wandlers (DA) und deren zweiter Ausgang (A2) mit dem Steuereingang des schaltbaren Filters (SE) verbunden ist, daß der Ausgang der Summationsstelle (SU) mit dem Eingang des Filters (SE) verbunden ist, deren Ausgang mit dem Eingang des Regelverstärkers (RV) verbunden ist und daß der Ausgang des Regelverstärkers (RV) mit dem Eingang des Stellgliedes (SG) verbunden ist.

11. Schaltungsanordnung nach Anspruch 10, **dadurch gekennzeichnet**, daß zwischen dem Regelverstärker (RV) und dem Stellglied (SG) ein steuerbarer Schalter (S) liegt, dessen Steuereingang mit einem dritten Ausgang (A3) der Kontrolleinheit (K) verbunden ist.

12. Schaltungsanordnung nach Anspruch 8, **dadurch gekennzeichnet**, daß der Ausgang einer Lichtempfangs- und Auswerteschaltung (O) mit dem einen Eingang einer Summationsstelle (SU) verbunden ist, deren anderer Eingang mit dem Ausgang eines Digital-Analog-Wandlers (DA) verbunden ist, daß der Eingang des Digital-Analog-Wandlers (DA) mit dem ersten Ausgang (A1) einer Kontrolleinheit (K) verbunden ist, deren zweiter Ausgang (A2) mit dem Steuereingang der Schaltbaren Filters (SE) und deren Eingang (E) mit dem Ausgang eines Fokusdetektors (FD) verbunden ist, daß der Ausgang der Summationsstelle (SU) mit dem Eingang des Fokusdetektors (FD) und mit dem Eingang des Filters (SE) verbunden ist, deren Ausgang mit dem Eingang des Regelverstärkers (RV) verbunden ist, und daß der Ausgang des Regelverstärkers (RV) mit dem Eingang des Stellgliedes (SG) verbunden ist.

**Claims**

1. A method of focusing a light beam which can be focused on to an optical recording medium with the aid of an optical system comprising a light source and a lens movable with the aid of an adjusting element (SG), said recording medium reflecting the light beam on to a number of photo elements (A, B, C, D) from the output voltages of which a first control voltage - the so-called focus error signal ($U_{FE}$) - is obtained by subtraction and addition, said first control voltage being capable of being fed via a control amplifier (RV) to the adjusting element, so that a control circuit is formed, in which a second control voltage ($U_s$) is generated by a signal generator (SR) which is changed by the signal generator (SR) until the light beam is focused on to the recording medium, whereupon the value W accepted at this point in time of the second control voltage ($U_s$) is kept and fed as an initial voltage to the adjusting element (SG), **characterised in that** while the second control voltage (Us) is changed in order to focus the lightbeam on to the recording medium the sum of the first and second control voltages ($U_{FE}$, $U_s$) is fed via a filter (SE) to the regulating amplifier (RV), said filter separating the first control voltage ($U_{FE}$) in terms of a.c. but letting through the second control voltage ($U_s$).

2. A method according to claim 1, **characterised in that** the value W of the second control voltage ($U_s$) can be stored for different types of recording medium and that when focusing with a certain type of recording medium the second control voltage is changed starting from the value W stored for this type.

3. A method according to claim 1 or 2, **characterised in that** the second control voltage ($U_s$) is changed by pulse modulation.

4. A method according to claim 3, **characterised in that** pulse width modulation is provided as the method of pulse modulation.

5. A method according to claim 4, **characterised in that** the second control voltage ($U_s$) is saw-tooth shaped.

6. A method according to claim 4, **characterised in that** the second control voltage ($U_s$) is triangular.

7.  A method according to claim 1, 2, 3, 4, 5 or 6, **characterised in that** an a.c. voltage is superimposed on the regulating voltage.

8.  A circuit arrangement for focusing a light beam, which can be focused on to an optical recording medium with the aid of an optical system, comprising a light source and a lens which can be moved with the aid of an adjusting element (SG), said recording medium reflecting the light beam on to a number of photo elements (A, B, C, D), from the output voltages of which a first control voltage - the so-called focus error signal ($U_{FE}$) - is obtained by subtraction and addition of the differences thus ascertained, said first control voltage being capable of being fed via a control amplifier (RV) to the adjusting element (SG), so that a control circuit is formed, in which means are provided to produce a second control voltage ($U_s$) from a signal generator (SR) which second voltage is changed by the signal generator (SR) until the light beam is focused on to the recording medium, whereupon the value W of the second control voltage ($U_s$) accepted at this point in time is kept and fed as an initial voltage to the adjusting element (SG), **characterised in that** a filter (SE) can be connected in front of the control amplifier (RV) which separates the first control voltage ($U_{FE}$) in terms of A.C. but lets through the second control voltage ($U_s$).

9.  A circuit arrangement according to claim 8, **characterised in that** means are provided such that the value W of the second control voltage ($U_s$) can be stored for different types of recording medium and that when focusing with a certain type of recording medium the second control voltage is changed starting from the value W stored for this type.

10. A circuit arrangement according to claim 8, **characterised in that** the output of a light receiving and evaluation circuit (O) is connected to the input of a focus detector (FD) and to one input of a summation point (SU), the other input being connected to the output of a digital/analogue converter(DA), that the output of the focus detector (FD) is connected to the input (E) of a control unit (K), its first output (A1) being connected to the input of the digital/analogue converter (DA) and its second output (A2) being connected to the control input of the switchable filter (SE), that the output of the summation point (SU) is connected to the input of the filter (SE), its output being connected to the input of the control amplifier (RV) and that the output of the control amplifier (RV) is connected to the input of the adjusting element (SG).

11. A circuit arrangement according to claim 10, **characterised in that** a controllable switch (S) lies between the regulating amplifier (RV) and the adjusting element (SG), its control input being connected to a third output (A3) of the checking unit (K).

12. A circuit arrangement according to claim 8, **characterised in that** the output of a light receiving and evaluation circuit (O) is connected to one input of a summation point (SU), its other input being connected to the output of a digital/analogue converter (DA), that the input of the digital/analogue converter (DA) is connected to the first output (A1) of a control unit (K), its second output (A2) being connected to the control input of the switchable filter (SE) and its input (E) being connected to the output of a focus detector (FD), that the output of the summation point (SU) is connected to the input of the focus detector (FD) and to the input of the filter (SE), its output being connected to the input of the control amplifier (RV) and that the output of the control amplifier (RV) is connected to the input of the adjusting element (SG).

**Revendications**

1.  Procédé pour focaliser un faisceau lumineux qui peut être focalisé sur un support d'enregistrement optique au moyen d'un système optique constitué par une source de lumière et un objectif mobile à l'aide d'un composant de réglage (SG), support d'enregistrement qui reflète le faisceau lumineux sur un certain nombre de cellules photoélectriques (A, B, C, D), une première tension de commande - ce qu'il est convenu d'appeler le signal d'erreur de foyer ($U_{FE}$) étant obtenue à partir de leurs tensions de sortie par soustraction et addition des différences ainsi déterminées, première tension de commande qui peut être amenée au composant de réglage (SG) par un amplificateur de réglage (RV) de telle manière qu'il se forme un circuit de réglage, une seconde tension de commande ($U_s$) étant produite par un générateur de signal (SR) et étant modifiée par le générateur de signal (SR) jusqu'à ce que le faisceau lumineux soit focalisé sur le support d'enregistrement, ce après quoi la valeur W de la seconde tension de commande ($U_s$) à ce moment-là est maintenue et amenée au composant de réglage (SG) comme prétension, **caractérisé en ce** que, pendant que la seconde tension de commande ($U_s$) est modifiée pour focaliser le faisceau lumineux sur le support d'enregistrement, la somme de la première et de la seconde tension de commande ($U_{FE}$, $U_s$) est amenée à l'amplificateur de réglage (RV) par un filtre (SE) qui sépare la première tension de commande (U$_{FE}$) pour ce qui est de la tension alternative mais qui, par contre, laisse passer la seconde tension de commande (U$_s$).

2. Procédé selon la revendication 1, **caractérisé en ce** que la valeur W de la seconde tension de commande (U$_s$) peut être mise en mémoire pour différents types de supports d'enregistrement et que lors de la focalisation, pour un certain type de support d'enregistrement, la seconde tension de commande est variée en partant de la valeur W mise en mémoire pour ce type.

3. Procédé selon la revendication 1 ou 2, **caractérisé en ce** que la seconde tension de commande (U$_s$) est modifiée par modulation d'impulsions.

4. Procédé selon la revendication 3, **caractérisé en ce** que la modulation d'impulsions en durée est prévue comme procédé de modulation d'impulsions.

5. Procédé selon la revendication 4, **caractérisé en ce** que la seconde tension de commande (U$_s$) est configurée en dent de scie.

6. Procédé selon la revendication 4, **caractérisé en ce** que la seconde tension de commande (U$_s$) est configurée en delta.

7. Procédé selon la revendication 1, 2, 3, 4, 5 ou 6, **caractérisé en ce** qu'une tension alternative est superposée à la tension de réglage.

8. Montage pour focaliser un faisceau lumineux qui peut être focalisé sur un support d'enregistrement optique au moyen d'un système optique constitué par une source de lumière et un objectif mobile à l'aide d'un composant de réglage (SG), support d'enregistrement qui reflète le faisceau lumineux sur un certain nombre de cellules photoélectriques (A, B, C, D), une première tension de commande - ce qu'il est convenu d'appeler le signal d'erreur de foyer (U$_{FE}$) étant obtenue à partir de leurs tensions de sortie par soustraction et addition des différences ainsi déterminées, première tension de commande qui peut être amenée au composant de réglage (SG) par un amplificateur de réglage (RV) de telle manière qu'il se forme un circuit de réglage, des moyens étant prévus pour produire une seconde tension de commande (U$_s$) à partir d'un générateur de signal (SR), tension de commande qui est modifiée par le générateur de signal (SR) jusqu'à ce que le faisceau lumineux soit focalisé sur le support d'enregistrement, ce après quoi la valeur W de la seconde tension de commande (U$_s$) à ce moment-là est maintenue et amenée au composant de réglage (SG) comme prétension, **caractérisé en ce** qu'un filtre (SE) peut être mis en circuit devant l'amplificateur de réglage (RV), filtre qui sépare la première tension de commande (U$_{FE}$) pour ce qui est de la tension alternative mais qui, par contre, laisse passer la seconde tension de commande (U$_s$).

9. Montage selon la revendication 8, **caractérisé en ce** que des moyens sont prévus de telle manière que la valeur W de la seconde tension de commande (U$_s$) peut être mise en mémoire pour différents types de supports d'enregistrement et que lors de la focalisation, pour un certain type de support d'enregistrement, la seconde tension de commande est variée en partant de la valeur W mise en mémoire pour ce type.

10. Montage selon la revendication 8, **caractérisé en ce** que la sortie d'un circuit de réception de la lumière et d'évaluation (O) est reliée à l'entrée d'un détecteur de foyer (FD) et à l'une des entrées d'un addeur (SU) dont l'autre entrée est reliée à la sortie d'un convertisseur numérique-analogique (DA), que la sortie du détecteur de foyer (FD) est reliée à l'entrée (E) d'une unité de contrôle (K) dont la première sortie (A1) est reliée à l'entrée du convertisseur numérique-analogique (DA) et dont la seconde sortie (A2) est reliée à l'entrée de commande du filtre qui peut être commandé (SE), que la sortie de l'addeur (SU) est reliée à l'entrée du filtre (SE) dont la sortie est reliée à l'entrée de l'amplificateur de réglage (RV) et que la sortie de l'amplificateur de réglage (RV) est reliée à l'entrée du composant de réglage (SG).

11. Montage selon la revendication 10, **caractérisé en ce** qu'un commutateur qui peut être commandé (S) se trouve entre l'amplificateur de réglage (RV) et le composant de réglage (SG), commutateur dont l'entrée de commande est reliée à une troisième sortie (A3) de l'unité de contrôle (K).

12. Montage selon la revendication 8, **caractérisé en ce** que la sortie d'un circuit de réception de la lumière et d'exploitation (O) est reliée à l'une des entrées d'un addeur (SU) dont l'autre entrée est reliée à la sortie d'un convertisseur numérique-analogique (DA), que l'entrée du convertisseur numérique-analogique (DA) est reliée à la première sortie (A1) d'une unité de contrôle (K) dont la seconde sortie (A2) est reliée à l'entrée de commande du filtre qui peut être commandé (SE) et dont l'entrée (E) est reliée à la sortie d'un détecteur de foyer (FD), que la sortie de l'addeur (SU) est reliée à l'entrée du détecteur de foyer (FD) et à l'entrée du filtre (SE) dont la sortie est reliée à l'entrée de l'amplificateur de réglage (RV) et que la sortie de l'amplificateur de réglage (RV) est reliée à l'entrée du composant de réglage (SG).

Fig. 1

Fig. 2

EP 0 432 658 B1

Fig. 3

Fig. 4

Fig. 5

Fig. 6

Fig. 7

Fig. 8

Fig. 9

Fig. 10   St. d. T.

Fig. 11   St. d. T.